# EUROPEAN PATENT APPLICATION

(11) **EP 4 664 888 A1**
(43) Date of publication of application: **17.12.2025**
(21) Application number: 24305923.5
(22) Date of filing: 12.06.2024
(51) Int. Cl.: H04N 19/463, G06T 9/00, G06T 13/40, H04N 19/597

(54) **VIDEO DYNAMIC AVATAR COMPRESSION (V-DAC)**

(71) Applicant: InterDigital CE Patent Holdings, SAS, 75017 Paris (FR)
(72) Inventor: COVA REGATEIRO, João Pedro, 35220 CHATEAUBOURG (FR); GUILLOTEL, Philippe, 35770 VERN SUR SEICHE (FR); GOSSELIN, Philippe Henri, 35235 THORIGNE-FOUILLARD (FR)
(74) Representative: Vossius & Partner Patentanwälte Rechtsanwälte mbB

(57) **Abstract**

Video dynamic avatar compression (V-DAC). One example method includes receiving, with an avatar encoder, one or more meshes, generating, with the avatar encoder, an avatar bitstream based on the one or more meshes, the avatar bitstream includes one or more encoded avatar parameters of a humanoid object, and outputting, with the avatar encoder, the avatar bitstream.

## Description

### FIELD OF THE INVENTION

The present disclosure relates generally to video coding. More specifically, examples described herein relate to encoding and decoding avatar streams containing animated human bodies.

### SUMMARY

The current contributions in MPEG for the signaling of mesh streams allow the encoding of general scenes including human shapes using V-DMC specification and SEI messaging technology.

Three-dimensional (3D) content is costly concerning physical memory storage and bandwidth transmission, and, as a consequence, a visual volumetric video-based coding (V3C) standard was created to address this problem for data types such as point clouds (ISO /IEC 23090-5) and immersive video content (ISO /IEC 23090-12).

V-DMC encodes a 3D dynamic mesh representation where topology varies for each frame in a sequence. A mesh representation is composed of polygons that describe the surface of a shape. For every polygon in the mesh, there is a spatial definition of the 3D shape (e.g., the (x, y, z) coordinates of each vertex) and the connectivity between the vertices. In a 3D mesh, there can also be additional attributes that relate to, for example, color information, normals, etc., of the shape. To exploit such functionalities, parameters of the mesh attributes, such as UV maps or texture coordinates, may be used. A 2D (UV) map may also be used to store high-resolution information, such as, for example, texture, normals, materials, etc.

V-DMC dynamic mesh content uses V3C components, such as a base mesh, displacement vectors, 2D maps for different mesh attributes, and a 2D atlas map.

To improve transmission bitrate, the input mesh in each frame of the dynamic mesh sequence is simplified to a lower resolution approximation called a base mesh, through a surface simplification procedure. A default midpoint subdivision scheme is then applied to iteratively up-sample the base mesh again to reach approximately the same resolution (number of vertices and faces) as the original mesh (although in the current V-DMC Test Model implementation, the number of vertices and faces in the up-sampled mesh is usually much larger than in the original mesh). The differences between the up-sampled mesh vertex (x, y, z) positions at the highest subdivision (resolution) level and the original mesh vertex positions (where the point correspondences between the original and subdivided meshes are found by nearest-point searching) are then represented as a set of displacement vectors (or "displacements").

These displacement vectors indicate how to deform the subdivided mesh surface to approximate the original mesh surface. The displacement vectors can be encoded by a profile or using SEI messaging. The attribute components provide additional properties, such as, for example, texture or material data. All this information can be encoded using standard 3D video coders (V3C).

The techniques described herein can do more than just compress general dynamic meshes and is not limited to a reproduction of the original sequence. Focusing the scene onto a prior template of a humanoid representation (avatar) improves compression efficiency and improves the bitstream transmission rate.

As used herein, a humanoid representation or object includes an object having human-like animation (e.g., facial expressions, poses, limbs, extremity movements, or other suitable human-like animation) or form (e.g., one or more arms, one or more legs, or other suitable human-like form). Accordingly, the "avatar" as described herein is with respect to a humanoid object. In other examples, the "avatar" may be with respect to other animatable but non-human objects including, for example, animals, monsters, cars, or any other suitable animatable object having human-like animation or form.

The techniques as described herein also go beyond the scope of compression and may be utilized with a generative neural network and/or traditional computer graphics techniques to drive the mesh data at the decoder side once decoded. For example, the techniques as described herein may be used in a mesh stream in a video conferencing use case to always output high-quality frames of people (meshes). The input video feed may be encoded and translated into an avatar parameter rig that may be paired with a V-DAC avatar stream that provides a geometry to be rendered and rig parameters that can be manipulated to change dynamically the content of the V-DAC stream. This is an improvement over V-DMC because this approach avoids encoding large sequences of dynamic mesh animations as in V-DMC.

Further, the avatar rig parameters are semantic based. Therefore, the avatar rig parameters may be changed or updated during the encoding (i.e., change the features before encoding them), during the decoding (i.e., change the decoded features before rendering), or defined in the stream, for instance, a filter may be set on blendshapes weights to ensure that only agreeable expressions are generated. Similar approaches may be followed playing with the pose (the person always faces the camera), the eye gaze (the person is always looking at you).

In some aspects, the techniques described herein relate to a method including: receiving, with an avatar encoder, one or more meshes; generating, with the avatar encoder, an avatar bitstream based on the one or more meshes, the avatar bitstream includes one or more encoded avatar parameters of a humanoid object; and outputting, with the avatar encoder, the avatar bitstream.

In some aspects, the techniques described herein relate to a method including: receiving, with an avatar decoder, an avatar bitstream that includes one or more encoded avatar parameters of a humanoid object; generating, with the avatar decoder, an avatar based on the avatar bitstream; and outputting, with the avatar decoder, the avatar.

Other examples, implementations, features, and aspects will become apparent by consideration of the detailed description and accompanying drawings.

### BRIEF DESCRIPTION OF THE DRAWINGS

In the accompanying figures similar or the same reference numerals may be repeated to indicate corresponding or analogous elements. These figures, together with the detailed description, below are incorporated in and form part of the specification and serve to further illustrate various embodiments, examples, aspects, and features of concepts that include the claimed subject matter, and to explain various principles and advantages of those embodiments, examples, aspects, and features.
FIG. 1 is a flow diagram that illustrates a comparative volumetric media conversion at an encoder side and media reconstruction at a decoder side.
FIG. 2 is a block diagram illustrating a system, in accordance with various aspects of the disclosure.
FIG. 3 is a flow diagram that illustrates processing of an avatar encoder, in accordance with various aspects of the present disclosure.
FIG. 4 is a flow diagram that illustrates processing of an avatar decoder, in accordance with various aspects of the present disclosure.
FIG. 5 is a flow chart illustrating an encoder workflow, in accordance with various aspects of the present disclosure.
FIG. 6 is a flow chart illustrating a decoder workflow, in accordance with various aspects of the present disclosure.

Skilled artisans will appreciate that elements in the figures are illustrated for simplicity and clarity and have not necessarily been drawn to scale. For example, the dimensions of some of the elements in the figures may be exaggerated relative to other elements to help improve understanding of the examples, aspects, and features presented in this disclosure.

The system, apparatus, and method components have been represented where appropriate by conventional symbols in the drawings, showing only those specific details that are pertinent to understanding of the various embodiments, examples, aspects, and features of the present disclosure so as not to obscure the disclosure with details that will be readily apparent to those of ordinary skill in the art having the benefit of the description herein.

### DETAILED DESCRIPTION

Examples are herein described with reference to flowchart illustrations and/or block diagrams of methods, apparatus (systems) and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a special purpose and unique machine, such that the instructions, which execute via the processor of the computer or other programmable data processing apparatus, create means for implementing the functions/acts specified in the flowchart and/or block diagram block or blocks. The methods and processes set forth herein need not, in some aspects, be performed in the exact sequence as shown and likewise various blocks may be performed in parallel rather than in sequence. Accordingly, the elements of methods and processes are referred to herein as "blocks" rather than "steps."

These computer program instructions may also be stored in a computer-readable memory that can direct a computer or other programmable data processing apparatus to function in a particular manner, such that the instructions stored in the computer-readable memory produce an article of manufacture including instructions which implement the function/act specified in the flowchart and/or block diagram block or blocks.

The computer program instructions may also be loaded onto a computer or other programmable data processing apparatus that may be on or off-premises, or may be accessed via the cloud in any of a software as a service (SaaS), platform as a service (PaaS), or infrastructure as a service (IaaS) architecture so as to cause a series of operational blocks to be performed on the computer or other programmable apparatus to produce a computer implemented process such that the instructions which execute on the computer or other programmable apparatus provide blocks for implementing the functions/acts specified in the flowchart and/or block diagram block or blocks. It is contemplated that any part of any example, feature, aspect, or embodiment discussed in this specification can be implemented or combined with any part of any other example, feature, aspect, or embodiment discussed in this specification.

Further advantages and features consistent with this disclosure will be set forth in the following detailed description, with reference to the figures.

### Existing Architecture

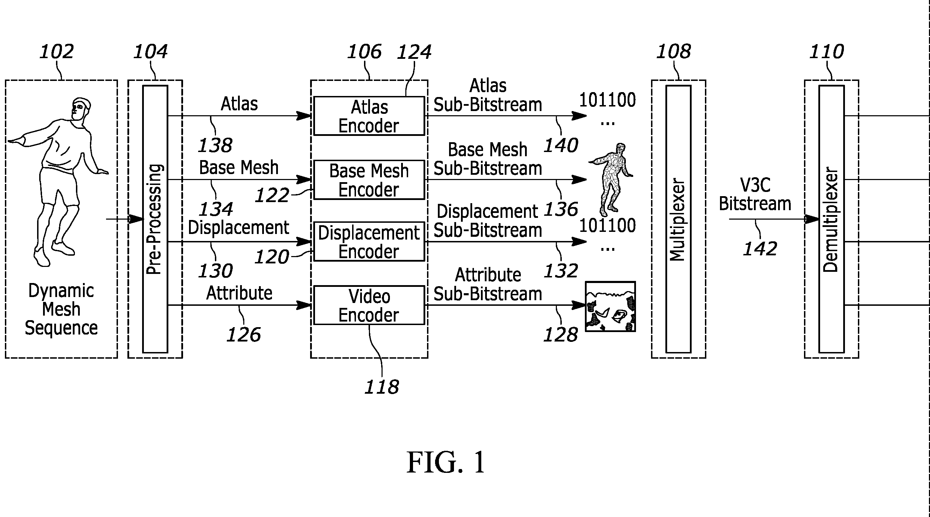

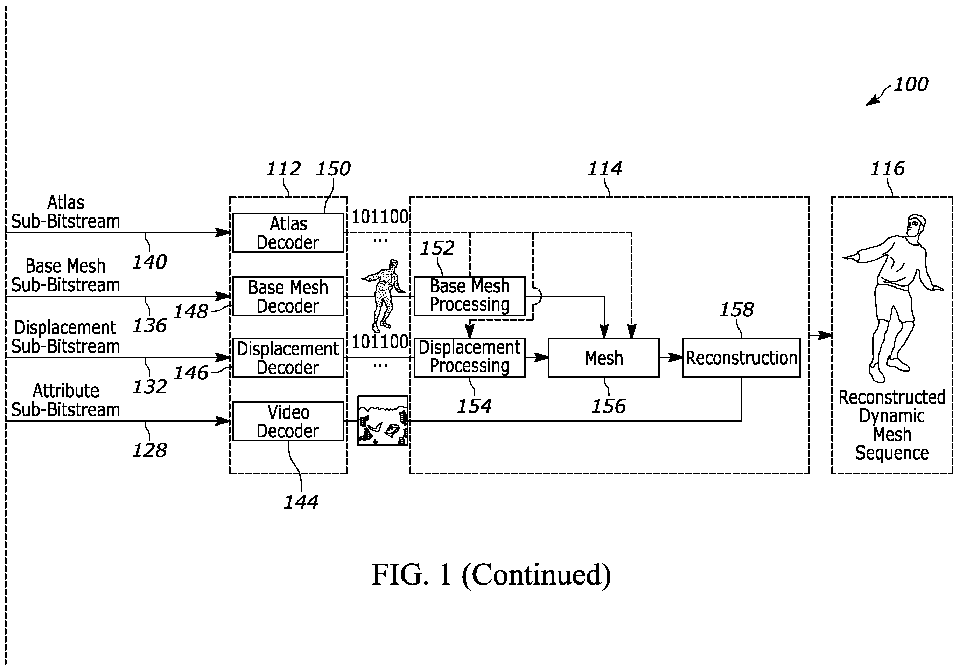

The current V3D and V-DMC techniques use generic base scene models with a complex mechanism to reduce the bit rate by altering the original mesh. FIG. 1 is a flow diagram that illustrates a comparative volumetric media conversion 100 at an encoder side and media reconstruction at a decoder side.

The volumetric media conversion 100 includes a three-dimensional media 102, pre-processing 104, the encoder 106, a multiplexer 108, a demultiplexer 110, the decoder 112, processing 114, and a reconstructed three-dimensional media 116.

The encoder 106 includes a video encoder 118, displacement encoder 120, and a base mesh encoder 122. Additionally, in some examples, the encoder 106 includes an atlas encoder 124.

The video encoder 118 receives one or more attributes 126 from the pre-processing 104 of the three-dimensional media 102 (e.g., a dynamic mesh sequence), encodes the one or more attributes 126, and outputs an attributes sub-bitstream 128. The displacement encoder 120 receives displacement data 130 from the pre-processing 104 of the three-dimensional media 102, encodes the displacement data 130, and outputs a displacement sub-bitstream 132. The base mesh encoder 122 receives base mesh data 134 from the pre-processing 104 of the three-dimensional media 102, encodes the base mesh data 134, and outputs a base mesh sub-bitstream 136. The atlas encoder 124 receives atlas data 138 from the pre-processing 104 of the three-dimensional media 102, encodes the atlas data 138, and outputs an atlas sub-bitstream 140. The atlas information may be included in the bitstream to enable inverse reconstruction.

The multiplexer 108 receives the attribute sub-bitstream 128, the displacement sub-bitstream 132, the base mesh sub-bitstream 136, and the atlas sub-bitstream 140 and combines the sub-bitstreams into a V3C bitstream 142.

The demultiplexer 110 receives the V3C bitstream 142 and extracts the attribute sub-bitstream 128, the displacement sub-bitstream 132, the base mesh sub-bitstream 136, and the atlas sub-bitstream 140 from the V3C bitstream 142. The demultiplexer 110 outputs the sub-bitstreams to the decoder 112.

The decoder 112 includes a video decoder 144, displacement decoder 146, and a base mesh decoder 148. Additionally, in some examples, the decoder 112 includes an atlas decoder 150.

The video decoder 144 receives the attribute sub-bitstream 128 from the demultiplexer 110, decodes the one or more attributes 126 from the attributes sub-bitstream 128, and outputs the one or more attributes 126. The displacement decoder 146 receives the displacement sub-bitstream 132 from the demultiplexer 110, decodes the displacement data 130 from the displacement sub-bitstream 132, and outputs the displacement data 130. The base mesh decoder 148 receives the base mesh sub-bitstream 136 from the demultiplexer 110, decodes the base mesh data 134 from the base mesh sub-bitstream 136, and outputs the base mesh data 134. The atlas decoder 150 receives the atlas sub-bitstream 140, decodes the atlas data 138 from the atlas sub-bitstream 140, and outputs the atlas data 138.

The processing 114 includes base mesh processing 152, displacement processing 154, mesh generation 156, and reconstruction 158. The mesh generation 156 receives a first output from the base mesh processing 152, where the first output is based on the base mesh data 134, and in some examples, a combination of the base mesh data 134 and the atlas data 138. Similarly, the mesh generation 156 receives a second output from the displacement processing 154, where the second output is based on the displacement data 130, and in some examples, a combination of the displacement data 130 and the atlas data 138. The mesh generation 156 generates and outputs a mesh based on the first and second outputs, and in some examples, a combination of the first output, the second output, and the atlas data 138.

The reconstruction 158 receives the mesh from the mesh generation 156 and the one or more attributes 126 from the video decoder 144. The reconstruction 158 generates the reconstructed dynamic mesh sequence 116 based on the mesh and the one or more attributes 126.

However, the comparative volumetric media conversion 100 (i.e., the current V-DMC architecture to represent dynamic meshes) does not contain all the features required for a complete avatar model representation. The comparative volumetric media conversion 100 also does not focus solely on humanoid shape representation as the prior knowledge of humanoid structures (skeleton, shape semantics, shape landmarks, visual cues in texture maps, or other suitable humanoid structures) is not present or supported.

More advanced techniques for deformation and animation (blendshape, skinning, motion graphs, or other advanced techniques for deformation and animation) are not supported or used by the current V-DMC standard.

### Example System Hardware and Architecture

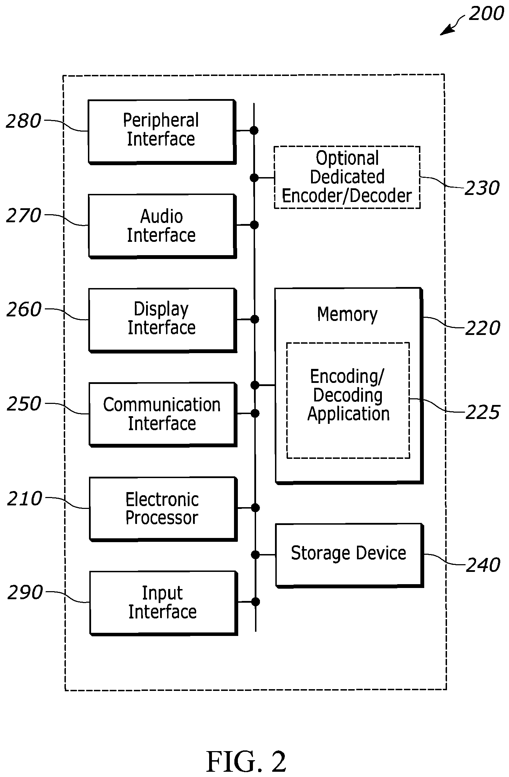

Instead of altering the base mesh, the techniques of the present disclosure take advantage of parametric models that require less effort to animate and transmit throughout the network. FIG. 2 is a block diagram illustrating a system 200, in accordance with various aspects of the disclosure for providing such techniques. As described herein, the system 200 performs video encoding and decoding. In the example of FIG. 2, the system 200 includes an electronic processor 210, a memory 220, an optional dedicated encoder/decoder 230, a storage device 240, a communication interface 250, a display interface 260, an audio interface 270, a peripheral interface 280, and an input interface 290.

In some implementations, the system 200 (also referred to herein as "computing system 200" or "computing device 200") may include fewer or additional components in configurations different from that illustrated in FIG. 2. Also, the system 200 may perform additional functionality than the functionality described herein. In addition, some of the functionality of the system 200 may be incorporated into other systems or other computing devices.

As illustrated in FIG. 2, the electronic processor 210, the memory 220, the optional dedicated encoder/decoder 230, the storage device 240, the communication interface 250, the display interface 260, the audio interface 270, the peripheral interface 280, and the input interface 290 are electrically coupled by one or more control or data buses enabling communication between the components. In other examples, some of the components of the system 200 may be communicatively connected to each other with wireless communication in place of, or in addition to, the control or data buses.

The electronic processor 210 executes machine-readable instructions stored in the memory 220. For example, the electronic processor 210 may execute instructions stored in the memory 220 to perform the functionality described herein. In some examples, the electronic processor 210 is a microprocessor, a microcontroller, an embedded processor, a digital signal processor (DSP), a media processor, application-specific system processor (ASSP), an application-specific instruction set processor (ASIP), an application-specific integrated circuit (ASIC), a multiprocessor, or other suitable electronic processor.

The memory 220 may include a program storage area (for example, read only memory (ROM)) and a data storage area (for example, random access memory (RAM), and other non-transitory, machine-readable medium). In some examples, the program storage area includes an encoding/decoding application 225. In one example, the encoding/decoding application 225 causes the electronic processor 210, the optional dedicated encoder decoder 230, or a combination thereof to perform the functionality described herein. In some examples, the data storage area may store video and/or image inputs received from the input interface 290.

The optional dedicated encoder/decoder 230 is an optional component dedicated to performing the encoding and decoding functionality described herein. The optional dedicated encoder/decoder 230 is considered "optional" because the electronic processor 210 in combination with the encoding/decoding application 225 may perform the functionality described herein without involving the optional dedicated encoder/decoder 230.

In some examples, the optional dedicated encoder/decoder 230 may be electronic processing circuitry dedicated to performing the functionality described herein in tandem with the electronic processor 210. In these examples, the encoding/decoding application 225 may coordinate encoding and decoding functions between the electronic processor 210 and the optional dedicated encoder/decoder 230.

In other examples, the optional dedicated encoder/decoder 230 may be electronic processing circuitry dedicated to performing the functionality described herein without involving the electronic processor 210. In these examples, the optional dedicated encoder/decoder 230 may be specific processing circuitry, specific video processing software/firmware, or a combination thereof.

The storage device 240 may include a program storage area that stores the encoding/decoding application 225. In some examples, the electronic processor 210 may load the memory 220 with the encoding/decoding application 225 by retrieving the encoding/decoding application 225 from the storage device 240.

The communication interface 250 may include communication circuitry configured to communicate with other communication interfaces via a communication channel or a network. In some examples, the communication interface 250 may be transmitter configured to transmit data, a receiver configured to receive data, or a transceiver configured to transmit data and receive data. In these examples, the communication interface 250 may be a modem, a network card, a Wi-Fi transceiver, a Bluetooth^{®} transceiver, a cellular transceiver, or other suitable communication interface.

The display interface 260 may be communicatively connected to a display screen with an array of pixels that generates and outputs images to a user. In some examples, the display screen is one of a liquid crystal display (LCD) screen, a light-emitting diode (LED) display screen, a quantum dot light-emitting diode (QLED) display screen, an interferometric modulator display (IMOD) screen, a micro light-emitting diode display screen (mLED), a virtual retinal display screen, or other suitable display screen.

The audio interface 270 may be communicatively connected to control an audio device. In some examples, the audio device may be speakers, headphones, earbuds, or other suitable audio device(s).

The peripheral interface 280 may be communicatively connected to control a peripheral device. In some examples, the peripheral device may be a keyboard, a mouse, or other suitable peripheral device(s).

The input interface 290 may receive one or more input signals from one or more input devices. The input interface 290 may provide the one or more input signals to the electronic processor 210 and/or the optional dedicated encoder/decoder 230 such that the electronic processor 210 and/or the optional dedicated encoder/decoder 230 may perform the encoding/decoding functionality described herein. In some examples, the input interface 290 may include a radio frequency (RF) receiver or transceiver that receives RF signals, a component input terminal, a composite video input terminal, a Universal Serial Bus (USB) input terminal, a High-Definition Multimedia Interface (HDMI) input terminal, or other suitable input terminal.

### Avatar Compression Format

Techniques described herein use an avatar encoder and decoder to handle geometrical, animation, and semantical proprieties related to avatar representations. The following parameters are related to avatar-specific data that may be included in (i.e., supplement) the current V-DMC encoding with avatar encoding and decoding: 1) affine translation matrix, 2) covariance matrix, 3) mouth matrix representing mouth motion, 4) eye matrix representing the open close status and level of eyes, 5) head rotation parameters representing the head rotation, 6) head translation matrix representing head translation, 7) head location matrix with size of representing the head location, 8) compact feature matrix, 9) rig parameters, 10) blendshapes, 11) rig blendshapes weights, 12) color parameters, and 13) sub-mesh semantic meaning. Currently, the sub-meshes in V-DMC are created without taking into account any semantic information about the different parts of the input mesh models.

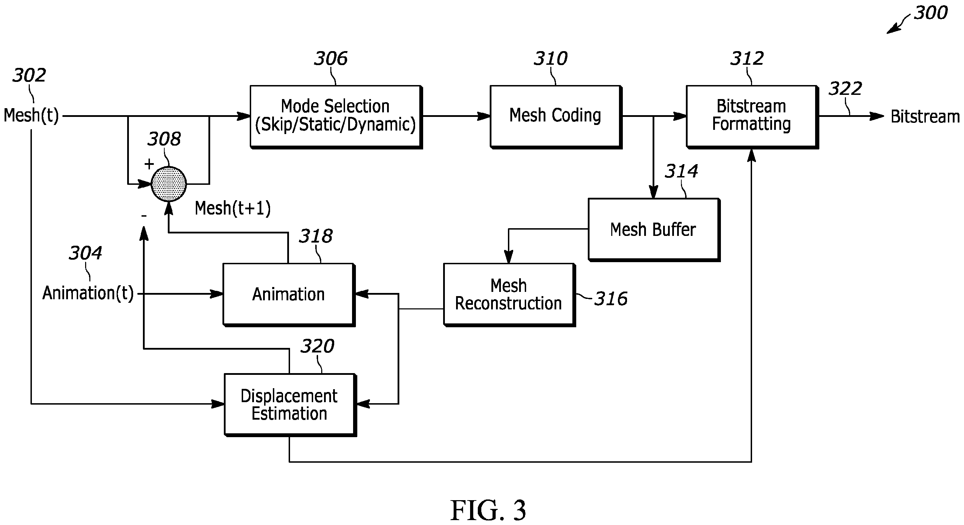

FIG. 3 is a flow diagram that illustrates processing of an avatar encoder 300, in accordance with various aspects of the present disclosure. The avatar encoder 300 includes an input Mesh(t) 302, an input Animation(t) 304, a mode flag detection operation 306, a summing operation 308, a mesh coding operation 310, a bitstream formatting operation 312, a mesh buffer 314, a mesh reconstruction operation 316, an animation operation 318, and a displacement estimation 320.

As illustrated in FIG. 3, the avatar encoder 300 receives the input Mesh(t) 302 and the input Animation(t) 304. The input Mesh(t) 302 is a sequence of meshes with a time instance t (also referred to herein as "one or more meshes"). The input Animation(t) 304 is a sequence of animation parameters related to the meshes with a time instance t (also referred to herein as "one or more animation parameters").

The mode flag detection 306 receives the input Mesh(t) 302 and an output from the summing node 308. With the mode flag detection 306, the avatar encoder 300 may determine whether the mesh and animations parameters are encoded with a "skip", "static," or "dynamic" mode. The "skip" mode skips the encoding of the mesh, given that there is no update to be done. The "static" mode relates to static properties of the mesh that are encoded in the stream (e.g., mesh, skeletal structures, static textures, blendshape parameters, or other suitable static properties).

The "dynamic" mode includes animations parameters that need to be applied to the template mesh to produce animations or deformations on the mesh. In some examples, the animations parameters include displacement information from the Animation(t) or from an estimation that is being used as a prediction of the mesh at the next time.

The mesh coding 310 encodes and compresses the mesh based on the mode selected at the mode flag detection 306. In some examples, the mesh coding may employ prediction (e.g., intraprediction) and transform to leverage spatial and temporal redundancy in content. For example, the mesh coding 310 may encode (e.g., transform, quantize, and entropy code) a residual (i.e., an error between a predicted mesh (e.g., a prediction of Mesh(t) or Mesh(t+1)) and the input Mesh(t)). In some examples, prediction techniques may be used with each of the modes described above (e.g., skip, static, and dynamic) or may only be used with a subset of such modes. Also, in some examples, the residuals represent an error between a prediction mode and one or more of the available modes.

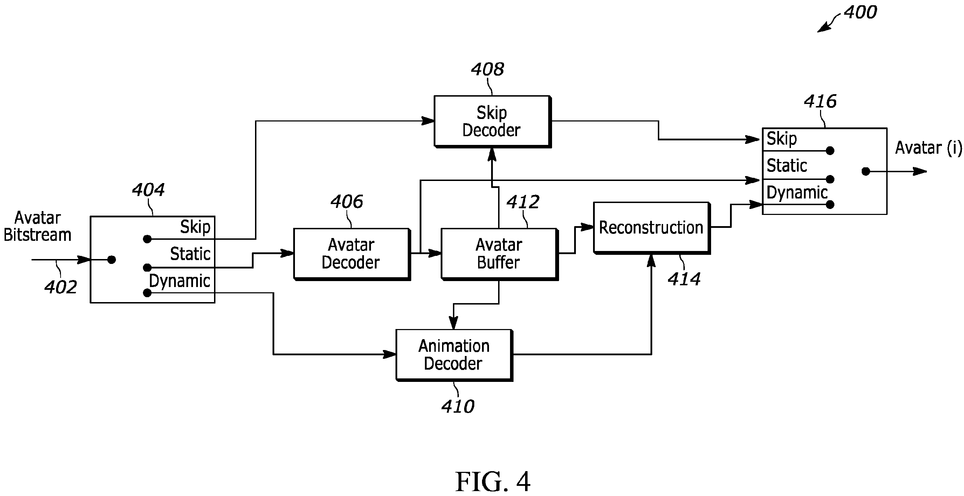

The output of the mesh coding 310 is output for the bitstream formatting operation 312 and is output to the mesh buffer 314. The bitstream formatting operation 312 formats the output of the mesh coding 310 into an avatar bitstream 322 to be transmitted to an avatar decoder as described below in FIG. 4. The mesh buffer 314 is a storage container for a sequence or single mesh representation, (e.g., static and dynamic information about the avatar proprieties). The mesh reconstruction operation 316 retrieves the output of the mesh coding 310 and generates a reconstructed mesh given all available parameters, static and dynamic.

The animation operation 318 receives the input Animation(t) 304 and the reconstructed mesh from the mesh reconstruction 316, and encodes animation parameters in the reconstructed mesh to generate an encoded Mesh(t+1). The animation parameters may take the form of blendshapes, blendshape weights, geometry displacements, texture displacements, skeletal joint transformation, or other suitable animation parameters.

The displacement estimation operation 320 receives the input Animation(t) 304 and the reconstructed mesh from the mesh reconstruction 316, and uses a model to encode the displacement from a template mesh (i.e., the reconstructed mesh) to a desired morphology. The encoding by the displacement estimation operation 320 may be a vector per vertex or vector per face that relates to the residual transformation between the base mesh shape and the target mesh shape.

The input to the avatar encoder 300 may be one of several different forms, which cause the avatar encoder 300 to operate in one of several static or temporal modes. In some examples, the input may be one or more point clouds that contain three-dimensional positional coordinates accompanied with or without colour information per coordinate. In other examples, the input to the avatar encoder 300 may be three-dimensional volumetric video that contains timed media that can include three-dimensional unordered meshes (dynamic mesh with varying topology per time frame), multiple view videos of a human performance accompanied of camera, and scene calibration parameters that allow the extraction of the performance into a three-dimensional digital format. In yet other examples, the input to the avatar encoder 300 may be one or more template meshes that contain a single ordered mesh, with or without a temporal sequence. The single ordered mesh is composed of 3D positional coordinates and triangular faces.

In some examples, the input to the avatar encoder 300 may be two-dimensional video that contains a temporal sequence of images that has the focus on a human appearance (e.g., head, body, face and/or hands). This 2D video may be accompanied with a region of interest window on each of the frames to highlight the target human to be encoded and transmitted.

In other examples, the input to the avatar encoder 300 may be one or more audio signals that contain an audio speech of a single human and can be translated into human animation. The use of one or more audio signals is based on an assumption that an avatar representation is already known by the system and the information required for compression depends on the use-case (e.g., the encoding contains a reference avatar representation to which it can retarget an animation based on audio signals).

In yet other examples, the input to the avatar encoder 300 may be natural language (textual information) that contains an ASCII character of a single human that can be translated into human animation. The use of natural language is based on an assumption that an avatar representation is already known by the system and the information required for compression depends on the use-case (e.g., the encoding contains a reference avatar representation to which it can retarget an animation based on text).

FIG. 4 is a flow diagram that illustrates processing of an avatar decoder 400, in accordance with various aspects of the present disclosure. The avatar decoder 400 includes an avatar bitstream 402, a mode flag detection operation 404, an avatar decoder 406, a skip decoder 408, an animation decoder 410, an avatar buffer 412, a reconstruction operation 414, and an avatar output operation 416.

The avatar decoder 400 receives the avatar bitstream 402 (e.g., the avatar bitstream 322 as described in FIG. 3). With the mode flag detection operation 404, the avatar decoder 400 determines whether the avatar bitstream 402 is flagged with a "Skip" mode, a "Static" mode, or a "Dynamic" mode.

Responsive to the mode flag detection operation 404 determining that the avatar bitstream 402 has a "Static" mode flag, the avatar decoder 406 processes the avatar bitstream 402. The avatar decoder 406 decodes the static feature attributes related to the avatar model in the avatar bitstream 402. Specifically, a model may be used by the avatar decoder 406 to decode geometrical information (e.g., template avatar mesh attributes) and the avatar decoder 406 provides the geometrical information to the avatar buffer 412 for caching and usage for the avatar bitstream 402 that is flagged with a dynamic mode flag or a skip mode flag. The avatar buffer 412 is a storage container for a sequence or single avatar representation (e.g., static information about the avatar proprieties). The avatar decoder 406 also encodes a template mesh that may be reused in a sequence of frames and stored/cached in the avatar buffer 412 for processing later using the animation decoder 410 and the reconstruction operation 414.

Responsive to the mode flag detection operation 404 determining the avatar bitstream 402 has a "Skip" mode flag, the skip decoder 408 processes the avatar bitstream 402. The skip decoder 408 uses the avatar parameters previously stored in the avatar buffer 412 by the avatar decoder 406 as the reference frame, and no information of the reference frame index is parsed from the avatar bitstream 402.

Responsive to the mode flag detection operation 404 determining the avatar bitstream 402 has a "Dynamic" mode flag, the animation decoder 410 processes the avatar bitstream 402. The animation decoder 410 extracts motion parameters from the avatar bitstream 402 for the encoded avatar and returns the motion parameters to the reconstruction operation 414 with a base avatar to recover the sequence of encoded mesh/sub-mesh avatar frames.

The reconstruction of the mesh involves "static" and "dynamic" avatar meshes reconstruction process. The reconstruction operation 414 handles the general reconstruction process of the dynamic avatar meshes given several possible settings.

In some examples, an avatar encoder (e.g., the avatar encoder 300 of FIG. 3) may also include a mode flag detection operation to select either the existing mesh coding technique (intra coding) or the reconstructed mesh(t) (from the animation parameters) depending on the trade-off quality-rate (RD). This selection may be performed on a per frame basis.

In other examples, residual coding may be added after the reconstruction operation 414 to encode the residual error after the reconstruction of the mesh(t), especially when using the animation parameters.

In yet other examples, a temporal displacement map is used to reconstruct mesh(t+1) and/or mesh(t-1). Reconstruction with a temporal displacement map may be added as a third encoding method input to the mode selection process. The temporal displacement map method may be applied on the base mesh or directly on the high-resolution mesh.

### Avatar Format

An avatar format as described herein may include various attributes. In some examples, attributes of the avatar format may include geometry attributes, appearance attributes, avatar parameters attributes, and avatar rig parameters attributes.

The geometry attributes may include vertices, faces, normals, texture coordinates, and blendshape basis. The appearance attributes may include materials, transparency, reflectance, vertex colors, and texture matrices. The vertex colors and texture matrices of the appearance attributes may include albedo, specular, roughness, and glossy.

The avatar parameters may include parametric weights and semantics. The attributes of parametric weights may include blendshape weights (identity or expression), vertex color weights (albedo, specular, roughness, glossy), and texture weights (albedo, specular, roughness, glossy). The attributes of semantics may include eye gaze, shape semantics (vertex, faces, normal, texture labelling or segmentation), and initial pose.

The avatar rig parameters may include skeleton attributes. The skeleton attributes may include joints, transformation matrices (bind-pose), bones structure, and skinning weight matrix.

The corresponding semantic is provided in Table 1 with semantical meaning to the geometry of the static mesh decoder.

**TABLE 1**

| **avatar_attribute_type [ i ]** | **Identifier** | **Attribute type** |
|---|---|---|
| 0 | ATTR_TEXTURE | Texture |
| 1 | ATTR_MATERIAL_ID | Material ID |
| 2 | ATTR_TRANSPARENCY | Transparency |
| 3 | ATTR_REFLECTANCE | Reflectance |
| 4 | ATTR_NORMAL | Normals |
| 5 | ATTR_TEXTCOORD | Texture coordinate |
| 6 | ATTR_FACEGROUP_ID | Face Group ID |
| 7 | ATTR_BLENDSHAPE_BASIS | Blendshape |
| 8 | ATTR_BLENDSHAPE_WEIGHTS | Blendshape weights |
| 9 | ATTR_VERTEX_COLORS_BASIS | Vertex color basis |
| 10 | ATTR_VERTEX_COLORS | Vertex colors |
| 11 | ATTR _VERTEX_COLORS_WEIGHTS | Vertex colors weights |
| 12 | ATTR_TEXTURE_BASIS | Texture basis |
| 13 | ATTR_TEXTURE_WEIGHTS | Texture weights |
| 14 | ATTR_EYE_GAZE | Eyes gaze |
| 15 | ATTR_SEMANTICS | Avatar semantics |
| 16..31 | ATTR_RESERVED | Reserved |
| 32 | ATTR_UNSPECIFIED | Unspecified |

The avatar_attribute_type [ i ] indicates the attribute type of the Avatar Video Data unit with index i. Table 1 above describes the list of supported attributes and the supported attributes relationship with avatar_attribute_type [ i ].

In other embodiments, the avatar_attribute_type [ j ][ i ] may also indicate the attribute type of the Avatar Video Data unit with index i and atlas index j. For every atlas j-th, a set of attributes from Table 1 defines a subset of the avatar present in the atlas map. In this embodiment the function "avatar_coding()" required as input an atlas identifier as follows, "avatar_coding( atlasID)" and all dependent function attributes will include the atlas identifier to make the connection between an atlas of an avatar and its attributes. For ease of understanding, the index j that refers to an atlas identifier is removed, and it is assumed that the encoding of the proprieties is for the entirety of an avatar representation, although it does not exclude the possibility of segmenting the avatar representation into an atlas type of representation.

The attribute ATTR TEXTURE is an attribute that contains texture information of an avatar frame. For example, this may indicate an attribute that contains RGB (Red, Green, Blue) color information.

The attribute ATTR_MATERIAL_ID is an attribute that contains supplemental information that identifies the material type of a point in an avatar frame. For example, the material type could be used as an indicator for identifying an object or the characteristic of a point within an avatar frame.

The attribute ATTR_TRANSPARENCY is an attribute that contains transparency information that is associated with each point in an avatar frame. The attribute ATTR_REFLECTANCE is an attribute that contains reflectance information that is associated with each point in an avatar frame.

The attribute ATTR_NORMAL is an attribute that contains a unit vector information associated with each point in an avatar frame. The unit vector specifies the perpendicular direction or a point at the surface. An attribute frame with this attribute type shall have a dimension equal to 2 bits. Each channel of an attribute frame with this attribute type shall contain one component of the unit vector (x, y, z), where the first component contains the x coordinate, the second component contains the y coordinate, and the third component contains the z coordinate.

The attribute ATTR_BLENDSHAPE_BASIS is an attribute that contains a unit vector information associated with each vertex in an avatar frame. The unit vector specifies the direction from a point of the avatar mesh. An attribute frame with this attribute type shall have a dimension equal to 2 bits. Each channel of an attribute frame with this attribute type shall contain one component of the unit vector (x, y, z), where the first component contains the x coordinate, the second component contains the y coordinate, and the third component contains the z coordinate.

The attribute ATTR_BLENDSHAPE_WEIGHTS is an attribute that contains scalar information associated with each blendshape previously transmitted in an avatar frame. The scalar specifies the normalized weight of the blendshape, e.g., a weight of zero means that the blendshape is at its neutral state, with no deformation/transformation of its vertices, and a weight of one means the shape is transformed with the vectors of the transmitted blendshape, finally, any value between zero and one required a linear interpolation of the neutral state and the given blendshape using the scalar weight as regularizer. An attribute frame with this attribute type shall have a dimension equal to 2 bits. Each channel of an attribute frame with this attribute type shall contain one component of the unit vector (x, y, z), where the first component contains the x coordinate, the second component contains the y coordinate, and the third component contains the z coordinate.

The attribute ATTR_VERTEX_COLORS_BASIS is an attribute that contains a unit vector information associated with each vertex color in an avatar frame. The unit vector specifies the color basis of the avatar mesh. An attribute frame with this attribute type shall have a dimension equal to 2 bits. Each channel of an attribute frame with this attribute type shall contain one component of the unit vector (r, g, b), where the first component contains the r (red) color, the second component contains the g (green) color, and the third component contains the b (blue) color.

The attribute ATTR_VERTEX_COLORS is an attribute that contains a unit vector information associated with each vertex color in an avatar frame. The unit vector specifies the color of the avatar mesh. An attribute frame with this attribute type shall have a dimension equal to 2 bits. Each channel of an attribute frame with this attribute type shall contain one component of the unit vector (r, g, b), where the first component contains the r (red) color, the second component contains the g (green) color, and the third component contains the b (blue) color.

The attribute ATTR_VERTEX_COLORS_WEIGHTS is an attribute that contains scalar information associated with each color basis previously transmitted in an avatar frame. The scalar specifies the normalized weight of the color basis e.g., a weight of zero means that the color basis is at its neutral state, with no deformation/transformation of its colors, and a weight of one means the shape is transformed with the color vectors of the transmitted color basis, finally, any value between zero and one required a linear interpolation of the neutral state and the given color basis using the scalar weight as regularizer. An attribute frame with this attribute type shall have a dimension equal to 2 bits. Each channel of an attribute frame with this attribute type shall contain one component of the unit vector (r, g, b), where the first component contains the r (red) color, the second component contains the g (green) color, and the third component contains the b (blue) color.

The attribute ATTR_TEXTURE_BASIS is an attribute that contains a unit vector information associated with each pixel in texture coordinate an avatar frame. The unit vector specifies a texture basis of the avatar mesh based on the base texture previously transmitted with the ATTR_TEXTURE attribute. For example, this may indicate an attribute that contains RGB (Red, Green, Blue) color information.

The attribute ATTR_TEXTURE_WEIGHTS is an attribute that contains scalar information associated with each texture basis previously transmitted in an avatar frame. The scalar specifies the normalized weight of the texture basis, e.g., a weight of zero means that the texture basis is at its neutral state (base texture), with no deformation/transformation of its uv coordinates, and a weight of one means the shape is transformed with the uv coordinate vectors of the transmitted texture basis, finally, any value between zero and one required a linear interpolation of the neutral state and the given texture basis using the scalar weight as regularizer.

The attribute ATTR_EYE_GAZE is an attribute that contains eye gaze direction information that is associated with an avatar frame. The attribute ATTR_SEMANTICS is an attribute that contains semantical and contextual additional information that is associated with an avatar frame, e.g., information as to whether an avatar is a humanoid object or other animatable object.

The attribute ATTR_UNSPECIFIED is an attribute that contains values that can be specified in the future as an integral part of the document, leaving room for future improvements without affecting the dimension of the bit stream. Values indicated as ATTR RESERVED are reserved for future use by ISO/IEC.

The following Table 2 is an example of the avatar coding function.

**TABLE 2**

| | |
|---|---|
| avatar_coding( ) { | **Descriptor** |
| avatar_coding_header() | |
| avatar_mesh_coding_payload() | |
| } | |

The following Table 3 is an example of the avatar coding header syntax.

**TABLE 3**

| | |
|---|---|
| avatar_coding_header() { | **Descriptor** |
| avatar attribute_present flag | u(1) |
| avatar_parameter_set_id | u(10) |
| avatar_position_encoding_parameters( ) | |
| **avatar_position_dequantize_flag** | u(1) |
| if (avatar_position_dequantize_flag ) | |
| avatar_position_dequantize_parameters( ) | |
| **avatar_attribute_count** | u(5) |
| for( i=0; i<avatar_attribute_count; i++ ){ | |
| **avatar_attribute_type** [ i ] | u(3) |
| if( avatar_attribute_type[ i ] == ATTR_TEXCOORD ) { | |
| **texture_type** [ i ] | u(2) |
| } else if( avatar_attribute_type [ i ] == ATTR_NORMAL ) { | |
| **normal_type** [ i ] | u(3) |
| } else if( avatar_attribute_type [ i ] == ATTR_COLOR ) { | |
| **color_type** [ i ] | u(3) |
| } else if( avatar_attribute_type [ i ] == ATTR_MATERIAL_ID ) { | |
| **material_id** [ i ] | u(1) |
| }else if( avatar_attribute_type [ i ] == ATTR_TRANSPARENCY) { | |
| **transparency_type** [ i ] | u(2) |
| }else if( avatar_attribute_type [ i ] == ATTR_REFLECTANCE) { | |
| **reflectance_type** [ i ] | u(1) |
| }else if( avatar_attribute_type [ i ] == ATTR_FACEGROUP_ID) { | |
| **facegroup_id** [ i ] | u(1) |
| }else if( avatar_attribute_type [ i ] == ATTR_BLENDSHAPE_BASIS) { | |
| **blendshapes_basis [ i ]** | u(2) |
| **blendshapes_count** | u(5) |
| }else if( avatar_attribute_type [ i ] == ATTR_BLENDSHAPE WEIGHTS) { | |
| **blendshapes_weights** [ i ] | u(1) |
| **blendshapes_weights_count_minus1** [ i ] | ue(v) |
| } else if( avatar_attribute_type [ i ] == ATTR_VERTEX_COLORS) { | |
| **colors_type** [ i ] | u(2) |
| } else if( avatar_attribute_type [ i ] == ATTR_VERTEX_COLORS_BASIS) { | |
| **colors_basis_type** [ i ] | u(2) |
| } else if( avatar_attribute_type [ i ] == ATTR _VERTEX_COLORS_WEIGHTS) { | |
| **colors_weights_type** [ i ] | u(2) |
| **colors_weights_count_minus1** [ i ] | ue(v) |
| } else if( avatar_attribute_type [ i ] == ATTR_PARAMETRIC_TEXTURE) { | |

**TABLE 3 - Continued**

| | |
|---|---|
| **texture_weights_type** [ i ] | u(2) |
| **texture_weights_count_minus1** [ i ] | ue(v) |
| } else if( avatar_attribute_type [ i ] == ATTR_PARAMETRIC_TEXTURE_BASIS) { | |
| **texture_basis_type [ i ]** | |
| } else if( avatar_attribute_type [ i ] == ATTR_EYE_GAZE) { | |
| **gaze_type** [ i ] | u(1) |
| } else if( avatar_attribute_type [ i ] == ATTR_SEMANTICS) { | |
| **semantics_signal** | u(1) |
| **semantics_type** [ i ] | u(2) |
| } | |
| **matrix_present_flag** | u(1) |
| If(matrix_present_flag) { | |
| **num_matrices_minus1** [ i ] | ue(v) |
| **matrices_width_minus1** [ i ] | ue(v) |
| **matrices_height_minus1** [ i ] | ue(v) |
| for( j = 0; j < numMatrices [ i ]; j++ ) { | |
| for( k = 0; k < matrixHeight [ i ]; k++ ) { | |
| for( l = 0; l <matrixWidth [ i ]; l++ ) { | |
| if(semantics_signal == 1) { | |
| **description_length** | u(8) |
| **description** | description_length *u(8) |
| } else { | |
| **avatar_matrix_element_int** [ i ][ j ][ k ][ l ] | ue(v) |
| **avatar_matrix_element_dec** [ i ][ j ][ k ][ l ] | u(v) |
| **avatar_matrix_element_sing_flag** [ i ][ j ][ k ][ l ] | u(1) |
| } | |
| } | |
| } | |
| } | |
| } | |
| } | |
| } | |

The following Table 4 is an example of the avatar position encoding parameters syntax.

**TABLE 4**

| | |
|---|---|
| avatar_position_encoding_parameters( ) { | **Descriptor** |
| **avatar_position_bit_depth_minus1** | u(4) |
| } | |

The following Table 5 is an example of the avatar position dequantize parameters syntax.

**TABLE5**

| | |
|---|---|
| avatar_position_dequantize_parameters( ) { | **Descriptor** |
| for( i=0; i< 3; i++ ){ | |
| **mesh_position_min** [ i ] | fl(32) |
| **mesh_position_max** [ i ] | fl(32) |
| } | |
| } | |

The following Table 6 is an example of the avatar position dequantize parameters syntax.

**TABLE 6**

| | |
|---|---|
| avatar_mesh_coding_payload() { | **Descriptor** |
| **vertex_count** | vu(v) |
| for( i=0; i<vertex_count; i++ ) { | |
| for( j=0; j<3; j++ ) { | |
| **avatar_position** [ i ] [ j ] | u(v) |
| } | |
| } | |

The formats are encoded in the "matrix" part of the encoding function (e.g., when avatar_attribute_present_flag is 1). Matrices are decoded at the end of the "matrix" part. This decoding needs the number of matrices (numMatrices[i]), the height of the matrices (matrixHeight[i]), and the width of the matrices (matrixWidth[i]). These values depend on the matrix type (avatar_attribute_type[i]) and the types are defined in Table 1.

The parameter num_matrices_minus1 [ i ] indicates the number of matrices used to encode the i-th attribute. The parameter matrices_width_minus1 [ i ] indicates the width of the matrix used to encode the i-th attribute. The parameter matrices_height_minus1 [ i ] indicates the width of the matrix used to encode the i-th attribute. The parameter avatar_matrix_element_int [ i ] [ j ] [ k ] [ l ] indicates the integer part of the value of the matrix element at position (k, l ) of the j-th matrix of the i-th type. The parameter avatar_matrix_element_dec [ i ] [ j ] [ k ] [ l ] indicates the decimal part of the value of the matrix element at position (k, l ) of the j-th matrix of the i-th type. The parameter avatar_matrix_element_sing_flag [ i ] [ j ] [ k ] [ l ] indicates the sign of the matrix element at position (k, l ) of the j-th matrix of the i-th type. When the sign is not present, it is inferred to be equal to zero.

The formats assume that the decoder (e.g., the avatar decoder 400 of FIG. 4) is based on an avatar based on a model of a mesh rig (including body and face rigs). This type of model has a 3D morphable model, with all the material needed by the model to render a rig, such as vertices, blendshapes, UV maps, and/or other suitable information to render the rig. As a result, only formats supported by the decoder model can be encoded. For instance, when a model does not support texture, no textures can be encoded.

The following sections detail the format and specifics of the attributes in Tables 2-6 with respect to avatar media representation. The descriptors format of Tables 2-6 includes fl(n), u(n), ue(v), and vu(v). The fl(n) descriptor is a binary floating point value using n bits. The u(n) descriptor is an unsigned integer using n bits. The ue(v) descriptor is an unsigned integer 0-th order with left bit first. When using "v", the number of bits varies depending on syntax elements. The vu(v) descriptor is an unsigned integer using variable number of bytes as group of 8 bits. When using "v", the number of bits varies depending on syntax elements.

The header data format of Table 3 includes avatar_parameter_set_id, avatar_attribute_present_flag, avatar_attribute_count, avatar_attribute_type, and avatar_position_dequantize_flag. The avatar_parameter_set_id indicates the index of the avatar mesh sub-bitstream associated with the i-th avatar attributes. The avatar_attribute_present_flag indicates that the mesh sub-stream contains avatar mesh attributes. The avatar_attribute_count indicates the number of attributes associated with the meshes and shall be in the range of 0 to 127, inclusive. The avatar_attribute_type indicates the attribute type of the attribute with index i for the mesh. Table 1 describes the list of supported attributes. The avatar_position_dequantize_flag equal to 1 specifies that the decoded 3D position of a mesh shall be dequantized using bounding box information and equal to 0 specifies that decoded attributes are (quantized) unsigned integers.

The avatar position encoding parameters semantics format of Table 3 includes avatar_position_bit_depth_minus1. The avatar_position_bit_depth_minus1 specifies the number of bits used to represent 3D position coordinates of the avatar mesh.

The avatar position encoding parameters semantics format of Table 5 includes mesh_position_min [ i ] and mesh_position_max [ i ]. The mesh_position_min [ i ] specifies the minimum value of the i-th components of 3D vertex positions. The mesh_position_max [ i ] specifies the maximum value of the i-th components of 3D vertex positions.

The avatar mesh coding semantics format of Table 6 includes vertex_count and avatar_position [ i ] [ j ]. The vertex_count specifies the number of vertices of the avatar mesh. The avatar_position [ i ] [ j ] specifies the i-th components of 3D vertex positions with 3 j-th components (x, y, z).

The header data format of Table 3 includes material_type[i], which can have the following values: 0: Diffuse, 1: Specular, 2: Translucent, 3: Albedo, 4: Normal, 5: Roughness, 6: Metalness, 7: Specular, 8: Height, 9: Opacity, 10: Ambient Occlusion, 11: Refraction, and 12: Emissive. The header data format of Table 3 also includes texture_size[i], which defines the size of the texture. The texture must have equal width and height. For the texture_size[i] with respect the material_type[i]: numMatrices[i] is dependent on the material model parameters, matrixHeight[i] is equal to the texture height, and matrixWidth[i] is equal to the texture width.

The header data format of Table 3 includes transparency _type[i] with one value. When transparency _type[i] is equal to one, then transparency is present, otherwise it is not transparent, i.e., opaque. For the texture_size[i] with respect the transparency_type[i]: numMatrices[i] is one, matrixHeight[i] is equal to the texture height, and matrixWidth[i] is equal to the texture width.

The header data format of Table 3 includes reflectance_type[i] with one value. When reflectance_type[i] is equal to one, then the reflectance model is present, otherwise there is no model. For the texture_size[i] with respect the reflectance_type[i]: numMatrices[i] is one, matrixHeight[i] is equal to one, and matrixWidth[i] is equal to the model parameters chosen for the reflectance.

The header data format of Table 3 includes colors_type[ i ], which can have the following values: 0: vertex and 1: faces. For the texture_size[i] with respect the colors_type[ i ]: numMatrices[i] is one, matrixHeight[i] is equal to the number of components used e.g. vertices require a size of 3 (x, y, z) coordinates, faces require a size of 3 or 4 values, depending if is triangular or quad faces representation, and matrixWidth[i] is equal to the number of vertices or faces.

The header data format of Table 3 includes textcoord_type[i], which when it equals one, the text coordinates are present, otherwise there is no mapping between vertices and the UV map. For the texture_size[i] with respect the textcoord_type[i]: numMatrices[i] is one, matrixHeight[i] is equal to the number of texture coordinates for the u channel, and matrixWidth[i] is equal to the number of texture coordinates for the v channel.

The header data format of Table 3 includes facegroup_type[i], which when it equals one, the faces are present, otherwise there is no faces information. For the texture_size[i] with respect the facegroup_type[i]: numMatrices[i] is one, matrixHeight[i] is equal to the number of components use for faces representation, and matrixWidth[i] is equal to the number of polygon faces.

The header data format of Table 3 includes blendshapes_basis [ i ] and blendshapes_count. When blendshapes_basis [ i ] is equal to one, the blendshapes correspond to expression, otherwise it is identity. Blendshapes_count is equal to the number of blendshapes associated with avatar_parameter_set_id. For the texture_size[i] with respect the blendshapes_basis [ i ] and blendshapes_count: numMatrices[i] is equal to the number of blendshapes, matrixHeight[i] is equal to the number of components in the vertices (x, y, z), and matrixWidth[i] equals number of vertices.

The header data format of Table 3 includes blendshapes_type[ i ] and blendshapes_weights_count_minus1[ i ]. When blendshapes_type[ i ] is equal to one, the blendshapes correspond to expression, otherwise it is identity. The blendshapes_weights_count_minus1[ i ] is a number minus one of blendshapes weights being provided (for pose, expression or identify, depending on blendshapes_type[ i ]). When this number is lower than the total number of corresponding blendshapes, then the number defines the first blendshapes weights, the remaining being zero. This number cannot be higher than the total number of corresponding blendshapes. For the texture_size[i] with respect the blendshapes_type[ i ] and blendshapes_weights_count_minus1[ i ]: numMatrices[i] is equal to one, matrixHeight[i] is equal to one, and matrixWidth[i] equals blendshapes_weights_count_minus1[ i ] plus one.

The header data format of Table 3 includes colors_type[ i ], which can have the following values: 0: Reflectance, 1: Specularity, 2: Roughness, 3: Glossy, 4: Diffuse, 5: Specular, 6: Translucent, 7: Albedo, 8: Normal, 9: Metalness, 10: Specular, 11: Height, 12: Opacity, 13: Ambient Occlusion, 14: Refraction, and 15: Emissive. For the texture_size[i] with respect the colors_type[ i ]: numMatrices[i] is equal to one, matrixHeight[i] is equal to the number of color components e.g., r (red), g (green), and b (blue), and matrixWidth[i] is equal to the number of vertices.

The header data format of Table 3 includes colors_basis_type[ i ], which can have the following values: 0: Reflectance, 1: Specularity, 2: Roughness, 3: Glossy, 4: Diffuse, 5: Specular, 6: Translucent, 7: Albedo, 8: Normal, 9: Metalness, 10: Specular, 11: Height, 12: Opacity, 13: Ambient Occlusion, 14: Refraction, and 15: Emissive. For the texture_size[i] with respect the colors_basis_type[ i ]: numMatrices[i] is equal to one, matrixHeight[i] is equal to the number of color components e.g., r (red), g (green), and b (blue), and matrixWidth[i] is equal to the number of vertices.

The header data format of Table 3 includes colors_weights_type[ i ], weights for the parametric vertex colors can have the following values: 0: Reflectance, 1: Specularity, 2: Roughness, 3: Glossy, 4: Diffuse, 5: Specular, 6: Translucent, 7: Albedo, 8: Normal, 9: Metalness, 10: Specular, 11: Height, 12: Opacity, 13: Ambient Occlusion, 14: Refraction, and 15: Emissive. The header data format of Table 3 also includes colors_weights_count_minus1[i], which defines the number of provided weights minus one. When the number of provided weights is lower than the maximum number, then the remaining weights are zero. The number of provided weights cannot be higher than the maximum number. For the texture_size[i] with respect the colors_weights_type[ i ]: numMatrices[i] is equal to one, matrixHeight[i] is equal to one, and matrixWidth[i] is equal to the number of weights equals colors_weights_count_minus1[ i ] + 1.

The header data format of Table 3 includes texture_basis_type[i], which can have the following values: 0: Reflectance, 1: Specularity, 2: Roughness, 3: Glossy, 4: Diffuse, 5: Specular, 6: Translucent, 7: Albedo, 8: Normal, 9: Metalness, 10: Specular, 11: Height, 12: Opacity, 13: Ambient Occlusion, 14: Refraction, and 15: Emissive. For the texture_size[i] with respect the texture_basis_type[i]: numMatrices[i] is equal to one, matrixHeight[i] is equal to the texture size, and matrixWidth[i] is equal to the texture size.

The header data format of Table 3 includes texture_weights_type[ i ], weights for the parametric can have the following values: 0: Reflectance, 1: Specularity, 2: Roughness, 3: Glossy, 4: Diffuse, 5: Specular, 6: Translucent, 7: Albedo, 8: Normal, 9: Metalness, 10: Specular, 11: Height, 12: Opacity, 13: Ambient Occlusion, 14: Refraction, and 15: Emissive. The header data format of Table 3 also includes texture_weights_count_minus1[i], which defines the number of provided weights minus one. When the number of provided weights is lower than the maximum number, then the remaining weights are zero. The number of provided weights cannot be higher than the maximum number. For the texture_size[i] with respect the texture_weights_type[ i ]: numMatrices[i] is equal to one, matrixHeight[i] is equal to one, and matrixWidth[i] is equal to the number of weights equals texture_weights_count_minus1[ i ] + 1.

The header data format of Table 3 includes gaze_type[i], which can have the following values: 0: 2D gaze and 1: 3D gaze. 2D gaze has two values: one for the horizontal rotation of the eyes, and one for the vertical rotation of the eyes, before any transformation of the rig. 3D gaze has three values (x, y, z) that define the 3D points the eyes point to, before any rig transformation. For the texture_size[i] with respect the gaze_type[i]: numMatrices[i] is one, matrixHeight[i] is equal to one, and matrixWidth[i] is equal to two for 2D gaze and three for 3D gaze.

The header data format of Table 3 includes semantics_type[i], which can have the following values: 0: provided semantics are for each vertex, 1: provided semantics are for each triangular face, 2: provided semantics are for UV coordinate, 3: provided semantics are for a single mesh, 4: provided semantics are for a sub mesh. The semantics_signal signals the decoder to decode text format to provide semantical information related to the semantics_type previously chosen. For the texture_size[i] with respect the semantics_type[i]: numMatrices[i] is one, matrixHeight[i] is equal to one, and matrixWidth[i] is equal to the number of parameters given by semantics_type [ i ], e.g., when equal to zero the size is equal to the number of vertices; else when equal to one the size is equal to the number of faces.

The header data format of Table 3 also includes description_length, which contains the size of the string used to describe the semantics in text form. The description is equal description_length*u(8) and provides context information to the decoder related to the semantics_type.

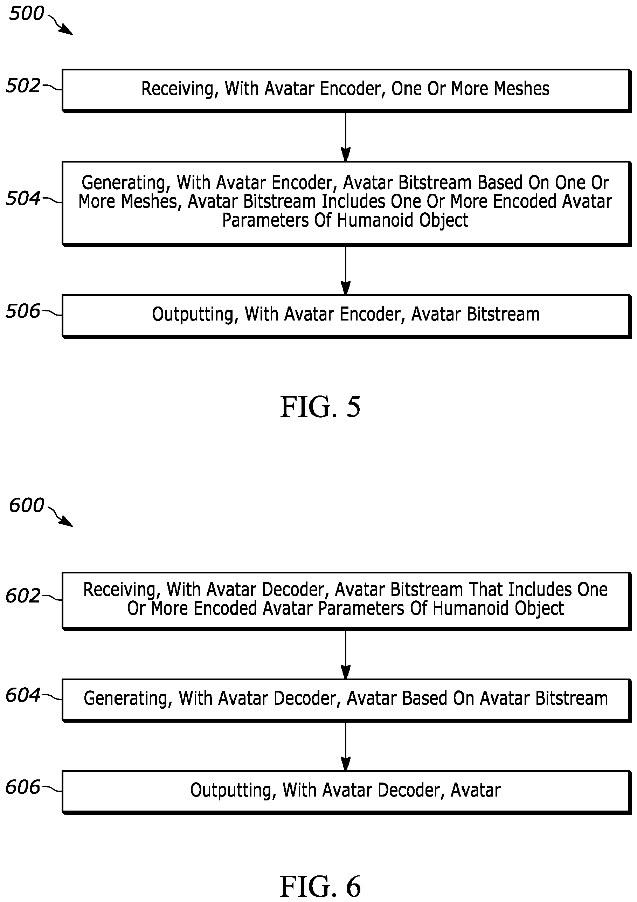

FIG. 5 is a flow chart illustrating an encoder workflow 500, in accordance with various aspects of the present disclosure. The encoder workflow 500 includes receiving, with an avatar encoder, one or more meshes (at block 502). The encoder workflow 500 includes generating, with the avatar encoder, an avatar bitstream based on the one or more meshes, the avatar bitstream includes one or more encoded avatar parameters of a humanoid object (at block 504). The encoder workflow 500 also includes outputting, with the avatar encoder, the avatar bitstream (at block 506).

In some examples, the encoder workflow 500 may further include storing, with the avatar encoder, the one or more meshes in a mesh buffer, receiving, with the avatar encoder, a second one or more meshes, generating, with the avatar encoder, one or more reconstructed meshes from the one or more meshes stored in the mesh buffer, generating, with the avatar encoder, a second avatar bitstream based on the one or more reconstructed meshes and the second one or more meshes, and outputting, with the avatar encoder, the second avatar bitstream. In these examples, the second avatar bitstream includes a second one or more encoded avatar parameters of a second humanoid object.

In some examples, the encoder workflow 500 may further include determining a mode selected from a plurality of modes based on the one or more meshes and one or more reconstructed meshes. In these examples, generating the avatar bitstream based on the one or more meshes may further include generating the avatar bitstream based on the one or more meshes, the one or more reconstructed meshes, and the mode selected from the plurality of modes.

In some examples, the plurality of modes may include a skip mode, a static mode, and a dynamic mode. In these examples, the skip mode skips encoding of the one or more meshes, wherein the static mode encodes static properties of the one or more meshes in the avatar bitstream, and wherein the dynamic mode encodes animation parameters to produce animations or deformations on the one or more meshes. Additionally, in these examples, the static properties may include some or all of mesh properties, skeletal structures, and blendshape parameters.

In some examples, the mode selected from the plurality of modes is the static mode, and generating the avatar bitstream based on the one or more meshes, the one or more reconstructed meshes, and the mode selected from the plurality of modes may further include generating one or more combined meshes by combining the one or more meshes and the one or more reconstructed meshes, encoding the one or more combined meshes with the static properties, and formatting the one or more combined meshes that are encoded with the static properties into the avatar bitstream. In these examples, the one or more encoded avatar parameters include the static properties and a flag indicating the static mode.

In some examples, the mode selected from the plurality of modes is the skip mode, and generating the avatar bitstream based on the one or more meshes, the one or more reconstructed meshes, and the mode selected from the plurality of modes may further include generating one or more combined meshes by combining the one or more meshes and the one or more reconstructed meshes, skipping encoding the one or more combined meshes with the static properties, and formatting the one or more combined meshes that are not encoded with the static properties into the avatar bitstream. In these examples, the one or more encoded avatar parameters include a flag indicating the skip mode.

In some examples, the encoder workflow 500 may further include receiving one or more animation parameters associated with the one or more meshes, and the mode selected from the plurality of modes is the dynamic mode. In these examples, generating the avatar bitstream based on the one or more meshes, the one or more reconstructed meshes, and the mode selected from the plurality of modes may further include estimating a displacement between the one or more meshes and one or more reconstructed meshes, encoding the one or more reconstructed meshes with the one or more animation parameters, encoding the one or more reconstructed meshes with the displacement, generating one or more combined meshes by combining the one or more meshes, the one or more reconstructed meshes encoded with the one or more animation parameters, and the one or more reconstructed meshes encoded with the displacement together, formatting the one or more combined meshes into the avatar bitstream. Additionally, in these examples, the one or more encoded avatar parameters include the one or more animation parameters, the displacement, and a flag indicating the dynamic mode.

Similarly, FIG. 6 is a flow chart illustrating a decoder workflow 600, in accordance with various aspects of the present disclosure. The decoder workflow 600 includes receiving, with an avatar decoder, an avatar bitstream that includes one or more encoded avatar parameters of a humanoid object (at block 602). The decoder workflow 600 includes generating, with the avatar decoder, an avatar based on the avatar bitstream (at block 604). The decoder workflow 600 also includes outputting, with the avatar decoder, the avatar (at block 606).

In some examples, generating the avatar based on the avatar bitstream may further include determining a mode selected from a plurality of modes is associated with the avatar bitstream based on the one or more encoded avatar parameters. In these examples, the one or more encoded avatar parameters includes a flag indicating one of a skip mode, a static mode, or a dynamic mode. In these examples, the skip mode skips decoding of the avatar bitstream, wherein the static mode decodes static properties of one or more meshes from the avatar bitstream, and wherein the dynamic mode decodes motion parameters from the avatar bitstream. Additionally, in these examples, the static properties may include some or all of mesh properties, skeletal structures, and blendshape parameters.

In some examples, the one or more encoded avatar parameters includes the flag indicating the static mode, and generating the avatar based on the avatar bitstream further includes decoding static properties from the avatar bitstream, encoding a template mesh, storing the static properties and the template mesh in an avatar buffer, and reconstructing the avatar from the static properties and the template mesh.

In some examples, the one or more encoded avatar parameters includes the flag indicating the skip mode, and generating the avatar based on the avatar bitstream may further include retrieving avatar parameters previously stored in an avatar buffer as a reference frame and reconstructing the avatar from the reference frame. In these examples, no information of the reference frame is parsed from the avatar bitstream.

In some examples, the one or more encoded avatar parameters includes the flag indicating the dynamic mode, and generating the avatar based on the avatar bitstream further includes extracting one or more animation parameters from the avatar bitstream, retrieving a base avatar stored in an avatar buffer, and reconstructing the avatar from the one or more animation parameters and the base avatar.

The following are enumerated methods, devices, non-transitory computer-readable media, and systems with a video dynamic avatar compression (V-DAC). Example 1: a method comprising: receiving, with an avatar encoder, one or more meshes; generating, with the avatar encoder, an avatar bitstream based on the one or more meshes, the avatar bitstream includes one or more encoded avatar parameters of a humanoid object; and outputting, with the avatar encoder, the avatar bitstream.

Example 2: the method of Example 1, further comprising: storing, with the avatar encoder, the one or more meshes in a mesh buffer; receiving, with the avatar encoder, a second one or more meshes; generating, with the avatar encoder, one or more reconstructed meshes from the one or more meshes stored in the mesh buffer; generating, with the avatar encoder, a second avatar bitstream based on the one or more reconstructed meshes and the second one or more meshes; and outputting, with the avatar encoder, the second avatar bitstream, wherein the second avatar bitstream includes a second one or more encoded avatar parameters of a second humanoid object.

Example 3: the method of Examples 1 or 2, further comprising: determining a mode selected from a plurality of modes based on the one or more meshes and one or more reconstructed meshes, wherein generating the avatar bitstream based on the one or more meshes further includes generating the avatar bitstream based on the one or more meshes, the one or more reconstructed meshes, and the mode selected from the plurality of modes.

Example 4: the method of Example 3, wherein the plurality of modes includes a skip mode, a static mode, and a dynamic mode.

Example 5: the method of Example 4, wherein the skip mode skips encoding of the one or more meshes, wherein the static mode encodes static properties of the one or more meshes in the avatar bitstream, and wherein the dynamic mode encodes animation parameters to produce animations or deformations on the one or more meshes.

Example 6: the method of Example 5, wherein the static properties include some or all of mesh properties, skeletal structures, and blendshape parameters.

Example 7: the method of Example 6, wherein the mode selected from the plurality of modes is the static mode, and wherein generating the avatar bitstream based on the one or more meshes, the one or more reconstructed meshes, and the mode selected from the plurality of modes further includes generating one or more combined meshes by combining the one or more meshes and the one or more reconstructed meshes, encoding the one or more combined meshes with the static properties, and formatting the one or more combined meshes that are encoded with the static properties into the avatar bitstream, wherein the one or more encoded avatar parameters include the static properties and a flag indicating the static mode.

Example 8: the method of Example 6, wherein the mode selected from the plurality of modes is the skip mode, and wherein generating the avatar bitstream based on the one or more meshes, the one or more reconstructed meshes, and the mode selected from the plurality of modes further includes generating one or more combined meshes by combining the one or more meshes and the one or more reconstructed meshes, skipping encoding the one or more combined meshes with the static properties, and formatting the one or more combined meshes that are not encoded with the static properties into the avatar bitstream, wherein the one or more encoded avatar parameters include a flag indicating the skip mode.

Example 9: the method of any of Examples 4-8, further comprising: receiving one or more animation parameters associated with the one or more meshes, wherein the mode selected from the plurality of modes is the dynamic mode, and wherein generating the avatar bitstream based on the one or more meshes, the one or more reconstructed meshes, and the mode selected from the plurality of modes further includes estimating a displacement between the one or more meshes and one or more reconstructed meshes, encoding the one or more reconstructed meshes with the one or more animation parameters, encoding the one or more reconstructed meshes with the displacement, generating one or more combined meshes by combining the one or more meshes, the one or more reconstructed meshes encoded with the one or more animation parameters, and the one or more reconstructed meshes encoded with the displacement together, formatting the one or more combined meshes into the avatar bitstream, wherein the one or more encoded avatar parameters include the one or more animation parameters, the displacement, and a flag indicating the dynamic mode.

Example 10: the method of any of Examples 1-9, further comprising: receiving a second one or more meshes; generating a second avatar bitstream based on the second one or more meshes, the second avatar bitstream includes one or more encoded avatar parameters of an animatable object; and outputting the second avatar bitstream.

Example 11: a method comprising: receiving, with an avatar decoder, an avatar bitstream that includes one or more encoded avatar parameters of a humanoid object; generating, with the avatar decoder, an avatar based on the avatar bitstream; and outputting, with the avatar decoder, the avatar.

Example 12: the method of Example 11, wherein generating the avatar based on the avatar bitstream further includes determining a mode selected from a plurality of modes is associated with the avatar bitstream based on the one or more encoded avatar parameters.

Example 13: the method of Example 12, wherein the one or more encoded avatar parameters includes a flag indicating one of a skip mode, a static mode, or a dynamic mode.

Example 14: the method of Example 13, wherein the skip mode skips decoding of the avatar bitstream, wherein the static mode decodes static properties of one or more meshes from the avatar bitstream, and wherein the dynamic mode decodes motion parameters from the avatar bitstream.

Example 15: the method of Example 14, wherein the static properties include some or all of mesh properties, skeletal structures, and blendshape parameters.

Example 16: the method of any of Examples 13-15, wherein the one or more encoded avatar parameters includes the flag indicating the static mode, and wherein generating the avatar based on the avatar bitstream further includes decoding static properties from the avatar bitstream, encoding a template mesh, storing the static properties and the template mesh in an avatar buffer, and reconstructing the avatar from the static properties and the template mesh.

Example 17: the method of any of Examples 13-16, wherein the one or more encoded avatar parameters includes the flag indicating the skip mode, wherein generating the avatar based on the avatar bitstream further includes retrieving avatar parameters previously stored in an avatar buffer as a reference frame, and reconstructing the avatar from the reference frame, and wherein no information of the reference frame is parsed from the avatar bitstream.

Example 18: the method of any of Examples 13-17, wherein the one or more encoded avatar parameters includes the flag indicating the dynamic mode, wherein generating the avatar based on the avatar bitstream further includes extracting one or more animation parameters from the avatar bitstream, retrieving a base avatar stored in an avatar buffer, and reconstructing the avatar from the one or more animation parameters and the base avatar.

Example 19: the method of any of Examples 11-18, further comprising: receiving a second avatar bitstream that includes one or more encoded avatar parameters of an animatable object; generating a second avatar based on the second avatar bitstream; and outputting the second avatar.

Example 20: a device comprising: an avatar encoder configured to receive one or more meshes, generate an avatar bitstream based on the one or more meshes, the avatar bitstream includes one or more encoded avatar parameters of a humanoid object, and output the avatar bitstream.

Example 21: the device of Example 20, further comprising: a mesh buffer, wherein the avatar encoder is further configured to: store the one or more meshes in the mesh buffer, receive a second one or more meshes, generate one or more reconstructed meshes from the one or more meshes stored in the mesh buffer, generate a second avatar bitstream based on the one or more reconstructed meshes and the second one or more meshes, and output the second avatar bitstream, wherein the second avatar bitstream includes a second one or more encoded avatar parameters of a second humanoid object.

Example 22: the device of Examples 20 or 21, wherein the avatar encoder is further configured to: determine a mode selected from a plurality of modes based on the one or more meshes and one or more reconstructed meshes, wherein, to generate the avatar bitstream based on the one or more meshes, the avatar encoder is further configured to generate the avatar bitstream based on the one or more meshes, the one or more reconstructed meshes, and the mode selected from the plurality of modes.

Example 23: the device of Example 22, wherein the plurality of modes includes a skip mode, a static mode, and a dynamic mode.

Example 24: the device of Example 23, wherein the skip mode skips encoding of the one or more meshes, wherein the static mode encodes static properties of the one or more meshes in the avatar bitstream, and wherein the dynamic mode encodes animation parameters to produce animations or deformations on the one or more meshes.

Example 25: the device of Example 24, wherein the static properties include some or all of mesh properties, skeletal structures, and blendshape parameters.

Example 26: the device of Example 25, wherein the mode selected from the plurality of modes is the static mode, and wherein, to generate the avatar bitstream based on the one or more meshes, the one or more reconstructed meshes, and the mode selected from the plurality of modes, the avatar encoder is further configured to: generate one or more combined meshes by combining the one or more meshes and the one or more reconstructed meshes, encode the one or more combined meshes with the static properties, and format the one or more combined meshes that are encoded with the static properties into the avatar bitstream, wherein the one or more encoded avatar parameters include the static properties and a flag indicating the static mode.

Example 27: the device of Example 25, wherein the mode selected from the plurality of modes is the skip mode, and wherein, to generate the avatar bitstream based on the one or more meshes, the one or more reconstructed meshes, and the mode selected from the plurality of modes, the avatar encoder is further configured to: generate one or more combined meshes by combining the one or more meshes and the one or more reconstructed meshes, skip encoding the one or more combined meshes with the static properties, and format the one or more combined meshes that are not encoded with the static properties into the avatar bitstream, wherein the one or more encoded avatar parameters include a flag indicating the skip mode.

Example 28: the device of any of Examples 23-27, wherein the avatar encoder is further configured to receive one or more animation parameters associated with the one or more meshes, wherein the mode selected from the plurality of modes is the dynamic mode, and wherein, to generate the avatar bitstream based on the one or more meshes, the one or more reconstructed meshes, and the mode selected from the plurality of modes, the avatar encoder is further configured to: estimate a displacement between the one or more meshes and one or more reconstructed meshes, encode the one or more reconstructed meshes with the one or more animation parameters, encode the one or more reconstructed meshes with the displacement, generate one or more combined meshes by combining the one or more meshes, the one or more reconstructed meshes encoded with the one or more animation parameters, and the one or more reconstructed meshes encoded with the displacement together, format the one or more combined meshes into the avatar bitstream, wherein the one or more encoded avatar parameters include the one or more animation parameters, the displacement, and a flag indicating the dynamic mode.

Example 29: the device of any of Examples 20-28, wherein the avatar encoder is further configured to receive a second one or more meshes, generate a second avatar bitstream based on the second one or more meshes, the second avatar bitstream includes one or more encoded avatar parameters of an animatable object, and output the second avatar bitstream.

Example 30: a device comprising: an avatar decoder configured to: receive an avatar bitstream that includes one or more encoded avatar parameters of a humanoid object, generate an avatar based on the avatar bitstream, and output the avatar.

Example 31: the device of Example 30, wherein, to generate the avatar based on the avatar bitstream, the avatar decoder is further configured to determine a mode selected from a plurality of modes is associated with the avatar bitstream based on the one or more encoded avatar parameters.

Example 32: the device of Example 31, wherein the one or more encoded avatar parameters includes a flag indicating one of a skip mode, a static mode, or a dynamic mode.

Example 33: the device of Example 32, wherein the skip mode skips decoding of the avatar bitstream, wherein the static mode decodes static properties of one or more meshes from the avatar bitstream, and wherein the dynamic mode decodes motion parameters from the avatar bitstream.

Example 34: the device of Example 33, wherein the static properties include some or all of mesh properties, skeletal structures, and blendshape parameters.

Example 35: the device of any of Examples 32-34, further comprising: an avatar buffer, wherein the one or more encoded avatar parameters includes the flag indicating the static mode, and wherein, to generate the avatar based on the avatar bitstream, the avatar decoder is further configured to: decode static properties from the avatar bitstream, encode a template mesh, store the static properties and the template mesh in the avatar buffer, and reconstruct the avatar from the static properties and the template mesh.

Example 36: the device of any of Examples 32-35, further comprising: an avatar buffer, wherein the one or more encoded avatar parameters includes the flag indicating the skip mode, wherein, to generate the avatar based on the avatar bitstream, the avatar decoder is further configured to: retrieve avatar parameters previously stored in the avatar buffer as a reference frame, and reconstruct the avatar from the reference frame, and wherein no information of the reference frame is parsed from the avatar bitstream.

Example 37: the device of any of Examples 32-36, wherein the one or more encoded avatar parameters includes the flag indicating the dynamic mode, wherein, to generate the avatar based on the avatar bitstream, the avatar decoder is further configured to: extract one or more animation parameters from the avatar bitstream, retrieve a base avatar stored in an avatar buffer, and reconstruct the avatar from the one or more animation parameters and the base avatar.

Example 38: the device of any of claims 30-37, wherein the avatar decoder is further configured to: receive a second avatar bitstream that includes one or more encoded avatar parameters of an animatable object, generate a second avatar based on the second avatar bitstream, and output the second avatar.

Example 39: a non-transitory computer-readable medium comprising instructions that, when executed by an electronic processor, cause the electronic processor to perform a set of operations comprising: receiving one or more meshes; generating an avatar bitstream based on the one or more meshes, the avatar bitstream includes one or more encoded avatar parameters of a humanoid object; and outputting the avatar bitstream.

Example 40: the non-transitory computer-readable medium of Example 39, further comprising: storing the one or more meshes in a mesh buffer; receiving a second one or more meshes; generating one or more reconstructed meshes from the one or more meshes stored in the mesh buffer; generating a second avatar bitstream based on the one or more reconstructed meshes and the second one or more meshes; and outputting the second avatar bitstream, wherein the second avatar bitstream includes a second one or more encoded avatar parameters of a second humanoid object.

Example 41: the non-transitory computer-readable medium of Examples 39 or 40, further comprising: determining a mode selected from a plurality of modes based on the one or more meshes and one or more reconstructed meshes, wherein generating the avatar bitstream based on the one or more meshes further includes generating the avatar bitstream based on the one or more meshes, the one or more reconstructed meshes, and the mode selected from the plurality of modes.

Example 42: the non-transitory computer-readable medium of Example 41, wherein the plurality of modes includes a skip mode, a static mode, and a dynamic mode.

Example 43: the non-transitory computer-readable medium of Example 42, wherein the skip mode skips encoding of the one or more meshes, wherein the static mode encodes static properties of the one or more meshes in the avatar bitstream, and wherein the dynamic mode encodes animation parameters to produce animations or deformations on the one or more meshes.

Example 44: the non-transitory computer-readable medium of Example 43, wherein the static properties include some or all of mesh properties, skeletal structures, and blendshape parameters.

Example 45: the non-transitory computer-readable medium of Example 44, wherein the mode selected from the plurality of modes is the static mode, and wherein generating the avatar bitstream based on the one or more meshes, the one or more reconstructed meshes, and the mode selected from the plurality of modes further includes generating one or more combined meshes by combining the one or more meshes and the one or more reconstructed meshes, encoding the one or more combined meshes with the static properties, and formatting the one or more combined meshes that are encoded with the static properties into the avatar bitstream, wherein the one or more encoded avatar parameters include the static properties and a flag indicating the static mode.

Example 46: the non-transitory computer-readable medium of Example 44, wherein the mode selected from the plurality of modes is the skip mode, and wherein generating the avatar bitstream based on the one or more meshes, the one or more reconstructed meshes, and the mode selected from the plurality of modes further includes generating one or more combined meshes by combining the one or more meshes and the one or more reconstructed meshes, skipping encoding the one or more combined meshes with the static properties, and formatting the one or more combined meshes that are not encoded with the static properties into the avatar bitstream, wherein the one or more encoded avatar parameters include a flag indicating the skip mode.

Example 47: the non-transitory computer-readable medium of any of Examples 42-46, further comprising: receiving one or more animation parameters associated with the one or more meshes, wherein the mode selected from the plurality of modes is the dynamic mode, and wherein generating the avatar bitstream based on the one or more meshes, the one or more reconstructed meshes, and the mode selected from the plurality of modes further includes estimating a displacement between the one or more meshes and one or more reconstructed meshes, encoding the one or more reconstructed meshes with the one or more animation parameters, encoding the one or more reconstructed meshes with the displacement, generating one or more combined meshes by combining the one or more meshes, the one or more reconstructed meshes encoded with the one or more animation parameters, and the one or more reconstructed meshes encoded with the displacement together, formatting the one or more combined meshes into the avatar bitstream, wherein the one or more encoded avatar parameters include the one or more animation parameters, the displacement, and a flag indicating the dynamic mode.

Example 48: the non-transitory computer-readable medium of any of Examples 39-47, wherein the set of operations further includes receiving a second one or more meshes; generating a second avatar bitstream based on the second one or more meshes, the second avatar bitstream includes one or more encoded avatar parameters of an animatable object; and outputting the second avatar bitstream.

Example 49: a non-transitory computer-readable medium comprising instructions that, when executed by an electronic processor, cause the electronic processor to perform a set of operations comprising: receiving an avatar bitstream that includes one or more encoded avatar parameters of a humanoid object; generating an avatar based on the avatar bitstream; and outputting the avatar.

Example 50: the non-transitory computer-readable medium of Example 49, wherein generating the avatar based on the avatar bitstream further includes determining a mode selected from a plurality of modes is associated with the avatar bitstream based on the one or more encoded avatar parameters.

Example 51: the non-transitory computer-readable medium of Example 50, wherein the one or more encoded avatar parameters includes a flag indicating one of a skip mode, a static mode, or a dynamic mode.

Example 52: the non-transitory computer-readable medium of Example 51, wherein the skip mode skips decoding of the avatar bitstream, wherein the static mode decodes static properties of one or more meshes from the avatar bitstream, and wherein the dynamic mode decodes motion parameters from the avatar bitstream.

Example 53: the non-transitory computer-readable medium of Example 52, wherein the static properties include some or all of mesh properties, skeletal structures, and blendshape parameters.

Example 54: the non-transitory computer-readable medium of any of Examples 51-53, wherein the one or more encoded avatar parameters includes the flag indicating the static mode, and wherein generating the avatar based on the avatar bitstream further includes decoding static properties from the avatar bitstream, encoding a template mesh, storing the static properties and the template mesh in an avatar buffer, and reconstructing the avatar from the static properties and the template mesh.

Example 55: the non-transitory computer-readable medium of any of Examples 51-54, wherein the one or more encoded avatar parameters includes the flag indicating the skip mode, wherein generating the avatar based on the avatar bitstream further includes retrieving avatar parameters previously stored in an avatar buffer as a reference frame, and reconstructing the avatar from the reference frame, and wherein no information of the reference frame is parsed from the avatar bitstream.

Example 56: the non-transitory computer-readable medium of any of Examples 51-55, wherein the one or more encoded avatar parameters includes the flag indicating the dynamic mode, wherein generating the avatar based on the avatar bitstream further includes extracting one or more animation parameters from the avatar bitstream, retrieving a base avatar stored in an avatar buffer, and reconstructing the avatar from the one or more animation parameters and the base avatar.

Example 57: the non-transitory computer-readable medium of any of Examples 49-56, wherein the set of operations further includes receiving a second avatar bitstream that includes a second one or more encoded avatar parameters of an animatable object; generating a second avatar based on the second avatar bitstream; and outputting the second avatar.

Example 58: a system comprising: a first device according to any of Examples 20-29; and a second device according to any of Examples 30-38.

In the foregoing specification, specific embodiments, examples, aspects, and features have been described. However, one of ordinary skill in the art appreciates that various modifications and changes can be made without departing from the scope of the subject matter as set forth in the claims below. Accordingly, the specification and figures are to be regarded in an illustrative rather than a restrictive sense, and all such modifications are intended to be included within the scope of present teachings. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover, the present aspects are not limited to VVC or HEVC, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Moreover, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a," "has ... a," "includes ... a," or "contains ... a" does not, without more constraints, preclude the existence of additional identical elements in the process, method, article, or apparatus that comprises, has, includes, contains the element. Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

Also, it should be understood that the illustrated components, unless explicitly described to the contrary, may be combined or divided into separate software, firmware, and/or hardware. For example, instead of being located within and performed by a single electronic processor, logic and processing described herein may be distributed among multiple electronic processors. Similarly, one or more memory modules and communication channels or networks may be used even if embodiments described or illustrated herein have a single such device or element. Also, regardless of how they are combined or divided, hardware and software components may be located on the same computing device or may be distributed among multiple different devices. Accordingly, in this description and in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

It will be appreciated that some embodiments, examples, aspects, and features may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, one or more of the embodiments, examples, aspects, and features presented herein can be implemented as a computer-readable storage medium having computer readable code stored thereon for programming a computer (e.g., comprising a processor) to perform a method as described and claimed herein. Any suitable computer-usable or computer readable medium may be utilized. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. In the context of this document, a computer-usable or computer-readable medium may be any medium that can contain, store, communicate, propagate, or transport the program for use by or in connection with the instruction execution system, apparatus, or device.

Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation. For example, computer program code for carrying out operations of various example embodiments may be written in an obj ect-oriented programming language such as Java, Smalltalk, C++, Python, or the like. However, the computer program code for carrying out operations of various example embodiments may also be written in conventional procedural programming languages, such as the "C" programming language or similar programming languages. The program code may execute entirely on a computer, partly on the computer, as a stand-alone software package, partly on the computer and partly on a remote computer or server or entirely on the remote computer or server. In the latter scenario, the remote computer or server may be connected to the computer through a local area network (LAN) or a wide area network (WAN), or the connection may be made to an external computer (for example, through the Internet using an Internet Service Provider).

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terms "substantially," "essentially," "approximately," "about," or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "one of," without a more limiting modifier such as "only one of," and when applied herein to two or more subsequently defined options such as "one of A and B" should be construed to mean an existence of any one of the options in the list alone (e.g., A alone or B alone) or any combination of two or more of the options in the list (e.g., A and B together).

A device or structure that is "configured" in a certain way is configured in at least that way, but may also be configured in ways that are not listed.

The terms "coupled," "coupling," or "connected" as used herein can have several different meanings depending on the context in which these terms are used. For example, the terms coupled, coupling, or connected can have a mechanical or electrical connotation. For example, as used herein, the terms coupled, coupling, or connected can indicate that two elements or devices are directly connected to one another or connected to one another through intermediate elements or devices via an electrical element, electrical signal or a mechanical element depending on the particular context.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various examples and embodiments for the purpose of streamlining the disclosure. This method of disclosure is not to be interpreted as reflecting an intention that the claimed subject matter requires more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

Thus, the present disclosure provides, among other things, a video dynamic avatar compression (V-DAC). Various features and advantages of the invention are set forth in the following claims.

## Claims

1. A method comprising:
receiving, with an avatar encoder, one or more meshes;
generating, with the avatar encoder, an avatar bitstream based on the one or more meshes, the avatar bitstream includes one or more encoded avatar parameters of a humanoid object; and
outputting, with the avatar encoder, the avatar bitstream.

2. The method of claim 1, further comprising:
storing, with the avatar encoder, the one or more meshes in a mesh buffer;
receiving, with the avatar encoder, a second one or more meshes;
generating, with the avatar encoder, one or more reconstructed meshes from the one or more meshes stored in the mesh buffer;
generating, with the avatar encoder, a second avatar bitstream based on the one or more reconstructed meshes and the second one or more meshes; and
outputting, with the avatar encoder, the second avatar bitstream,
wherein the second avatar bitstream includes a second one or more encoded avatar parameters of a second humanoid object.

3. The method of claims 1 or 2, further comprising:
determining a mode selected from a plurality of modes based on the one or more meshes and one or more reconstructed meshes,
wherein generating the avatar bitstream based on the one or more meshes further includes generating the avatar bitstream based on the one or more meshes, the one or more reconstructed meshes, and the mode selected from the plurality of modes.

4. The method of claim 3, wherein the plurality of modes includes a skip mode, a static mode, and a dynamic mode.

5. The method of claim 4, wherein the skip mode skips encoding of the one or more meshes, wherein the static mode encodes static properties of the one or more meshes in the avatar bitstream, and wherein the dynamic mode encodes animation parameters to produce animations or deformations on the one or more meshes.

6. The method of claim 5, wherein the static properties include some or all of mesh properties, skeletal structures, and blendshape parameters.

7. The method of any of claims 1-6, further comprising:
receiving a second one or more meshes;
generating a second avatar bitstream based on the second one or more meshes, the second avatar bitstream includes one or more encoded avatar parameters of an animatable object; and
outputting the second avatar bitstream.

8. A device including an avatar encoder configured to perform a method according to any of one of claims 1-7.

9. A method comprising:
receiving, with an avatar decoder, an avatar bitstream that includes one or more encoded avatar parameters of a humanoid object;
generating, with the avatar decoder, an avatar based on the avatar bitstream; and
outputting, with the avatar decoder, the avatar.

10. The method of claim 9, wherein generating the avatar based on the avatar bitstream further includes determining a mode selected from a plurality of modes is associated with the avatar bitstream based on the one or more encoded avatar parameters.

11. The method of claim 10, wherein the one or more encoded avatar parameters includes a flag indicating one of a skip mode, a static mode, or a dynamic mode.

12. The method of claim 11, wherein the skip mode skips decoding of the avatar bitstream, wherein the static mode decodes static properties of one or more meshes from the avatar bitstream, and wherein the dynamic mode decodes motion parameters from the avatar bitstream.

13. The method of claim 12, wherein the static properties include some or all of mesh properties, skeletal structures, and blendshape parameters.

14. A device including an avatar decoder configured to perform a method according to any of one of claims 9-13.

15. A system including an avatar encoder configured to perform a method according to any one of claims 1-7 and an avatar decoder configured to perform a method according to any of one of claims 9-13.
